# FASCICULE DE BREVET EUROPEEN

(11) **EP 2 491 279 B1**
(45) Date de publication et mention de la délivrance du brevet: **07.08.2013**
(21) Numéro de dépôt: 10768763.4
(22) Date de dépôt: 18.10.2010
(51) Int. Cl.: F16J 15/08, H01M 8/02, C25B 9/00, C25B 9/06

(54) **JOINT D'ETANCHEITE ENTRE DEUX ELEMENTS A COEFFICIENTS DE DILATATION THERMIQUE DIFFERENTS**
VERSCHLUSS ZWISCHEN ZWEI ELEMENTEN MIT SEPARATEN WÄRMEAUSDEHNUNGSKOEFFIZIENTEN
SEAL BETWEEN TWO ELEMENTS HAVING SEPARATE THERMAL EXPANSION COEFFICIENTS

(30) Priorité: 20.10.2009 FR 0957344
(43) Date de publication de la demande: 29.08.2012
(73) Titulaire: Commissariat à l'Énergie Atomique et aux Énergies Alternatives, 75015 Paris (FR); Technetics Group France SAS, 42000 Saint-Etienne (FR); ARMINES, 75272 Paris Cedex 06 (FR)
(72) Inventeur: REYTIER, Magali, F-38250 Villard de Lans (FR); BESSON, Jacques, F-77920 Samois-sur-Seine (FR); BRUGUIERE, Lionel, F-34130 Saint-Aunes (FR); JULIAA, Jean-François, F-26200 Montelimar (FR)
(74) Mandataire: Ilgart, Jean-Christophe
(86) Numéro de dépôt international: PCT/EP2010/065649
(87) Numéro de publication internationale: WO 2011/048056

(56) Documents cités:
- EP-A1- 2 071 216
- FR-A1- 2 925 487
- US-A1- 2006 239 765

## Description

### DOMAINE TECHNIQUE

L'invention concerne de façon générale un joint d'étanchéité destiné à être interposé entre deux éléments quelconques, présentant des coefficients de dilatation thermique différents.

La présente invention s'applique plus particulièrement, mais non exclusivement, au domaine des systèmes à cellules électrochimiques, de préférence des systèmes du type électrolyseur haute température, également dénommé EHT, et/ou du type pile à combustible, de préférence fonctionnant à haute température comme des piles dites SOFC (de l'anglais « Solid Oxyde Fuel Cell »).

### ETAT DE LA TECHNIQUE ANTERIEURE

De façon connue, un électrolyseur de vapeur d'eau à haute température est destiné à produire de l'hydrogène. Pour ce faire, il comprend une pluralité de cellules électrochimiques empilées, chaque cellule étant pourvue d'une anode poreuse et d'une cathode poreuse, ainsi que d'un électrolyte agencé entre l'anode et la cathode. De plus, à chaque cellule électrochimique sont associés un interconnecteur anodique et un interconnecteur cathodique, reliés respectivement à l'anode et à la cathode, et chacun en contact étanche avec l'électrolyte.

Au niveau de la cathode poreuse de l'électrolyseur alimentée en vapeur d'eau, a lieu la dissociation des molécules d'eau. Les ions migrent à travers l'électrolyte solide, généralement en céramique, grâce à l'application d'une tension appropriée, pour se recombiner aux électrodes.

Pour éviter la recombinaison de l'hydrogène et de l'oxygène, il est donc prévu d'étancher la liaison entre l'électrolyte et l'interconnecteur cathodique, ainsi que la liaison entre l'électrolyte et l'interconnecteur anodique, cela permettant simultanément d'éviter la fuite des gaz vers l'extérieur de l'électrolyseur, ainsi que la formation d'un mélange de gaz.

Un tel joint est connu de l'art antérieur, par example du document EP2071216 A1.

A cet égard, il est noté qu'une conception sensiblement similaire se retrouve sur une pile à combustible fonctionnant à haute température, étant donné qu'elle fonctionne selon le principe inverse de celui de l'électrolyseur.

Pour assurer l'étanchéité mentionnée ci-dessus, plusieurs contraintes doivent être respectées, et en particulier l'application d'un faible effort pour le serrage du joint d'étanchéité, afin d'éviter d'endommager / de rompre l'électrolyte fragile en céramique.

En outre, l'étanchéité doit être conservée durant les phases de montée et de descente en température, ce qui présente des difficultés importantes en raison du phénomène de dilatation différentielle qui se produit entre chaque interconnecteur et l'électrolyte. En effet, durant la montée en température opérée pour que le système atteigne sa température de fonctionnement, après mise en place et serrage du joint, l'interconnecteur a tendance à plus se déformer dans la direction radiale que l'électrolyte. Cette dilatation différentielle a pour conséquence, avec les solutions connues du type à joint monobloc, la rupture de l'étanchéité entre le joint et l'interconnecteur, du fait du glissement relatif entre ces deux pièces. Un phénomène analogue se produit durant la descente en température.

Ce type de problème ne concerne pas seulement les systèmes à cellule électrochimique, mais plus généralement tout assemblage comprenant deux éléments à coefficient de dilatation thermique différents, entre lesquels est interposé un joint d'étanchéité.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet un joint d'étanchéité destiné à être interposé entre un premier et un second éléments respectivement réalisés dans des matériaux présentant des coefficients de dilatation thermique différents, ledit joint étant caractérisé en ce qu'il comprend :
- une première et une seconde portions métalliques de contact espacées l'une de l'autre selon une direction axiale d'empilement orthogonale à une direction radiale du joint, lesdites première et seconde portions métalliques étant respectivement destinées à contacter de façon étanche lesdits premier et second éléments ;
- des moyens de liaison étanche entre lesdites première et seconde portions métalliques de contact, autorisant un déplacement relatif entre celles-ci selon ladite direction radiale ; et
- une première et une seconde pièces de glissement empilées selon ladite direction axiale d'empilement, et respectivement couplées en translation selon ladite direction radiale auxdites première et seconde portions métalliques de contact entre lesquelles elles sont interposées, de manière à pouvoir glisser relativement l'une par rapport à l'autre selon ladite direction radiale.

La conception proposée est remarquable en ce qu'elle permet de maintenir l'étanchéité durant les phases de montée et de descente en température. Effectivement, durant une montée en température opérée après mise en place et serrage du joint, l'un des deux éléments situés de part et d'autre du joint a tendance à plus se déformer que l'autre, dans la direction radiale. Mais au lieu d'un glissement entre la portion métallique de contact et son élément associé, tel que rencontré dans l'art antérieur, il se produit un glissement entre les deux pièces de glissement prévues à cet effet au coeur du joint d'étanchéité. Les première et seconde portions de contact peuvent donc respectivement accompagner les déformations des premier et second éléments, notamment grâce auxdits moyens de liaison appropriés, sans glisser sur ces derniers, c'est-à-dire en conservant un contact d'étanchéité. Un phénomène analogue se produit durant la descente en température.

Par ailleurs, il est noté que le déplacement relatif entre les premières et secondes pièces de glissement est préférentiellement possible dans toutes les directions de leur plan d'interface, de préférence orienté orthogonalement à la direction axiale d'empilement. Ainsi, le déplacement relatif peut non seulement s'effectuer dans la direction radiale, mais également dans la direction orthoradiale, à savoir la direction dite tangentielle/ circonférentielle.

De préférence, lesdites première et seconde pièces de glissement sont au contact l'une de l'autre, éventuellement équipées d'un revêtement favorisant le glissement. Dans le même but, une pièce intercalaire peut être insérée entre les première et seconde pièces de glissement, dans la direction axiale d'empilement.

De préférence, lesdites première et seconde portions métalliques de contact présentent chacune au moins un organe de contact d'étanchéité en saillie dans la direction axiale d'empilement, vers l'extérieur du joint, ainsi qu'au moins un organe de couplage en translation en saillie dans la direction axiale d'empilement, vers l'intérieur du joint, logé dans un orifice complémentaire pratiqué dans sa pièce de glissement associée.

De préférence, lesdites première et seconde portions métalliques de contact sont réalisées dans un alliage de Fer, de Chrome et d'Aluminium, par exemple de la marque FeCrAlloy^{®}.

De préférence, ladite première pièce de glissement est réalisée dans un alliage comprenant l'élément Ni dans une proportion d'au moins 72%, Cr dans une proportion de 14 et 17%, et Fe dans une proportion entre 6 et 10%, par exemple les alliages appartenant à la famille dénommée Inconel^{®} 600. Cela permet avantageusement à la première pièce de glissement de disposer d'un coefficient de dilatation thermique proche ou identique à celui de l'élément dont elle est censée accompagner le déplacement, lorsque cet élément est réalisé dans un superalliage à base de Nickel, tel que cela est généralement le cas pour un interconnecteur de cellule électrochimique.

De préférence, ladite seconde pièce de glissement est réalisée en zircone yttriée ou en Macor^{®}, c'est-à-dire une vitrocéramique facilement usinable de coefficient de dilatation proche de la zircone 11.10-6 et de composition suivante : Si02 (46%), MgO (17%), Al203 (16%), K20 (10%), B203 (7%), F (4%). Cela permet avantageusement à la seconde pièce de glissement de disposer d'un coefficient de dilatation thermique proche ou identique à celui de l'élément dont elle est censée accompagner le déplacement, lorsque cet élément est réalisé en céramique, tel que cela est généralement le cas pour un électrolyte de cellule électrochimique.

De préférence, lesdits moyens de liaison étanche sont réalisés dans un alliage de Fer, de Chrome, et d'Aluminium par exemple également de la marque FeCrAlloy^{®}. Préférentiellement, ces moyens de liaison sont réalisés dans le même matériau que celui des première et seconde portions de contact.

De préférence, quel que soit le mode de réalisation préféré adopté, le joint présente préférentiellement une forme sensiblement annulaire.

De préférence, le rapport entre l'épaisseur de la première pièce de glissement et l'épaisseur de la première portion métallique de contact est compris entre 2 et 5, de même que le rapport entre l'épaisseur de la seconde pièce de glissement et l'épaisseur de la seconde portion métallique de contact est compris entre 2 et 5.

L'invention se rapporte également à un assemblage quelconque comprenant au moins un joint d'étanchéité tel que décrit ci-dessus, interposé entre un premier et un second éléments respectivement réalisés dans des matériaux présentant des coefficients de dilatation thermique différents, ledit assemblage constituant par exemple une partie d'un système à cellules électrochimiques.

De préférence, lesdites première et seconde pièces de glissement du joint présentent, respectivement, des coefficients de dilatation thermique proches ou identiques à ceux desdites premier et second éléments. Cela permet globalement au joint de mieux accompagner la déformation thermique des premier et second éléments, puisque les première et seconde pièces de glissement qui leur sont respectivement associées se déforment selon des amplitudes similaires. Ainsi, durant les phases de montée et de descente en température, le maintien de l'étanchéité est donc encore davantage amélioré.

Par exemple, les premier et second éléments sont respectivement métallique et en céramique, comme cela est habituellement le cas pour les systèmes à cellules électrochimiques, du type électrolyseur et/ou pile à combustible fonctionnant à haute température.

A cet égard, l'invention a également pour objet un système à cellule électrochimique comprenant au moins un joint d'étanchéité tel que décrit ci-dessus. De préférence, il comprend au moins une cellule électrochimique pourvue d'une anode, d'une cathode, ainsi que d'un électrolyte agencé entre l'anode et la cathode, un interconnecteur anodique et un interconnecteur cathodique étant associés à ladite cellule électrochimique, reliés respectivement à l'anode et à la cathode, ledit système comprenant également au moins un joint d'étanchéité tel que décrit ci-dessus, placé entre ledit électrolyte et l'interconnecteur anodique, et/ou entre ledit électrolyte et l'interconnecteur cathodique. De préférence, deux joints distincts sont respectivement prévus pour les deux emplacements précités.

Comme évoqué ci-dessus, chacune desdites première et seconde pièces de glissement présente de préférence un coefficient de dilatation thermique proche ou identique à celui de l'élément, parmi les interconnecteurs anodique et cathodique et l'électrolyte, auquel elle est associée.

De préférence, les interconnecteurs anodique et cathodique sont métalliques et l'électrolyte en céramique.

Comme mentionné précédemment, le système peut être un électrolyseur haute température, ou une pile à combustible fonctionnant à haute température, par exemple du type SOFC.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique en coupe d'une cellule électrochimique d'un électrolyseur haute température, coopérant de part et d'autre avec des interconnecteurs par l'intermédiaire de deux joints d'étanchéité selon la présente invention ;
- la figure 2 représente une vue détaillée en demi-coupe de l'un des deux joints montrés sur la figure 1, le joint se présentant sous la forme d'un mode de réalisation préféré de la présente invention, dans une configuration non contrainte ;
- la figure 3a représente le joint montré sur la figure précédente, après son serrage ; et
- la figure 3b représente le joint montré sur la figure précédente, en état dilaté de fonctionnement.

### EXPOSÉ DÉTAILLÉ DE MODES DE RÉALISATION PRÉFÉRÉS

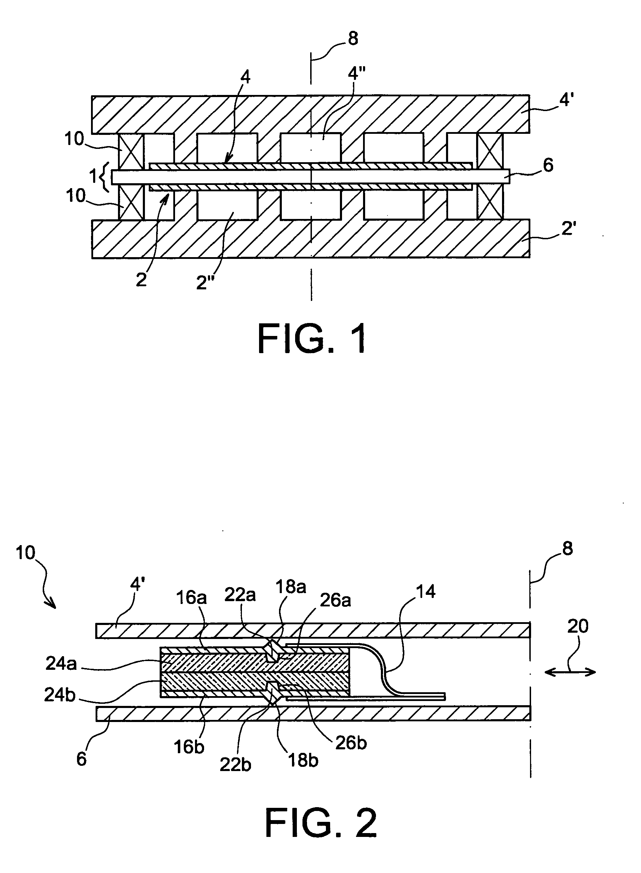

En référence tout d'abord à la figure 1, on peut apercevoir schématiquement une cellule électrochimique 1 d'un électrolyseur haute température, de préférence de géométrie dite plane.

Sa conception générale est connue, à savoir qu'elle comprend une anode poreuse 2, une cathode poreuse 4, ainsi qu'un électrolyte 6 agencé en contact entre l'anode et la cathode. Ces pièces, de préférence de forme circulaire, sont empilées selon une direction axiale d'empilement correspondant à leur axe 8.

A cette cellule 1 est associé un interconnecteur anodique 2' plaqué contre l'anode, et définissant avec celle-ci une chambre ou compartiment anodique 2" à travers lequel le fluide peut circuler. De la même manière, il est prévu un interconnecteur cathodique 4' plaqué contre la cathode, et définissant avec celle-ci une chambre ou compartiment cathodique 4" à travers lequel le fluide peut circuler.

De façon classique, les interconnecteurs 2', 4' sont métalliques, tandis que l'électrolyte solide est en céramique. Encore plus préférentiellement, les interconnecteurs peuvent être en superalliage à base de Nickel, par exemple ceux commercialisés sous la marque Haynes 230^{®}, ou bien en acier ferritique, par exemple ceux commercialisés sous la marque de type CroFer^{®}.

Pour assurer l'étanchéité des compartiments 2", 4", il est prévu un joint d'étanchéité 10 entre l'électrolyte 6 et l'interconnecteur 2', ainsi qu'un autre joint d'étanchéité 10, de conception identique ou similaire, entre l'électrolyte 6 et l'interconnecteur 4'. Ces joints sont de préférence annulaires, d'axe 8, agencés en périphérie de l'empilement, et plus particulièrement radialement vers l'extérieur par rapport à l'anode et à la cathode.

La particularité de l'invention réside dans la conception de ces joints d'étanchéité 10, dont l'un va à présent être décrit au travers d'un mode de réalisation préféré.

Tout d'abord en référence à la figure 2 représentant le joint 10 en demi-coupe, on peut voir qu'il présente une première et une seconde portions métalliques de contact 16a, 16b, espacées l'une de l'autre selon la direction axiale d'empilement 8, orthogonale à une direction radiale du joint schématisée par la flèche 20. Ces deux portions 16a, 16b sont respectivement destinées à être en contact extérieur avec la surface inférieure de l'interconnecteur cathodique 4', et avec la surface supérieure de l'électrolyte 6, les contacts étanches étant de préférence linéiques, et encore plus préférentiellement circulaires, orthogonaux à l'axe 8. Pour ce faire, chaque portion 16a, 16b comporte un organe de contact d'étanchéité 18a, 18b, en saillie dans la direction axiale d'empilement vers l'extérieur du joint, en direction de son élément associé 4', 6. Cet organe peut être une nervure annulaire centrée sur l'axe 8, ou bien encore une pluralité de pions répartis circonférentiellement autour de ce même axe. Dans les deux cas, chaque organe de contact d'étanchéité 18a, 18b présente une section, dans un plan radial intégrant l'axe 8, en forme générale de pointe orientée vers l'élément 4', 6 qu'il est destiné à contacter. Ainsi, sa partie la plus effilée, qui est destinée à être au contact de son élément associé 4', 6, présente une section faible dans un plan orthogonal à l'axe 8, propice à un écrasement important par déformation plastique.

En outre, chaque portion 16a, 16b comporte également un organe de couplage en translation 22a, 22b, en saillie dans la direction axiale d'empilement vers l'intérieur du joint. Ici aussi, l'organe 22a, 22b peut être une nervure annulaire centrée sur l'axe 8, ou bien encore une pluralité de pions répartis circonférentiellement autour de ce même axe. En outre, il est par exemple prévu que l'organe 18a, 18b soit situé au droit de l'organe 22a, 22b situé sur la même pièce 16a, 16b.

Chacune de ces pièces 16a, 16b prend donc préférentiellement la forme générale d'un disque centré sur l'axe 8, de faible épaisseur, réalisé dans un alliage de Fer, de Chrome et d'Aluminium, par exemple de la marque FeCrAlloy^{®}.

Les portions 16a, 16b sont reliées l'une à l'autre par des moyens de liaison étanche, prenant ici la forme d'une structure intérieure 14 ouverte radialement vers l'extérieur, et aux extrémités de laquelle sont respectivement solidarisées les deux portions de contact 16a, 16b, de préférence par soudage. La structure intérieure 14 présente une flexibilité dans la direction radiale 20, de manière à autoriser un déplacement relatif, selon cette même direction, entre les deux portions de contact 16a, 16b qu'elle supporte. Pour assurer cette flexibilité, on fait de préférence en sorte que cette structure annulaire 14, centrée sur l'axe 8, dispose d'une demi-section en forme générale de C ou de U ouvert radialement vers l'extérieur, comme cela est montré sur la figure 2. Dans cette configuration, la base du U ou du C sert de rempart d'étanchéité vis-à-vis des autres éléments du joint qui seront décrits ci-après, tandis que les deux branches portent respectivement les deux portions de contact 16a, 16b.

Dans le mode de réalisation représenté, le U ou le C est réalisé à partir de deux demi-structures annulaires reliées entre elles, par exemple par soudage, ou tout autre technique connue de l'homme du métier. Néanmoins, une solution d'un seul tenant est envisageable. De plus, d'autres formes assurant une telle flexibilité peuvent être envisagées, sans sortir du cadre de l'invention.

La structure intérieure 14, de faible épaisseur conférant la flexibilité souhaitée, peut également être réalisée dans un alliage de Fer, de Chrome et d'Aluminium, par exemple de la marque FeCrAlloy^{®}.

L'une des particularités de la présente invention réside dans la mise en place, au sein du joint entre les deux portions de contact 16a, 16b, d'une première et d'une seconde pièces de glissement 24a, 24b également empilées selon la direction axiale d'empilement 8. Ces deux pièces sont annulaires, centrées sur l'axe 8. La pièce 24a est en contact surfacique avec la surface inférieure de la première portion de contact 16a, tandis que la pièce 24b est en contact surfacique avec la surface supérieure de la seconde portion de contact 16b. Au niveau de chacune de ces interfaces, l'organe de couplage en translation 22a, 22b pénètre dans un orifice complémentaire 26a, 26b, prévu sur la surface de la pièce 24a, 24b concernée. Cela assure un couplage en translation, selon la direction radiale 20, entre la première pièce de contact 16a et la première pièce de glissement 24a, ainsi qu'entre la seconde pièce de contact 16b et la seconde pièce de glissement 24b.

D'autre part, les deux pièces de glissement 24a, 24b sont en appui l'une contre l'autre, de préférence en appui plan orthogonal à l'axe 8, de manière à pouvoir glisser relativement l'une par rapport à l'autre selon la direction radiale 20, et, si nécessaire, également selon la direction orthoradiale correspondant à la direction tangentielle/ circonférentielle. Elles peuvent être équipées de revêtements favorisant le glissement, et sont de préférence au contact l'une de l'autre.

Lorsque l'interconnecteur 4' est réalisé en superalliage à base de Nickel, la première pièce de glissement 24a est elle préférentiellement réalisée dans le même matériau ou dans un alliage dénommé Inconel^{®} 600, moins coûteux. En revanche, lorsque l'interconnecteur 4' est réalisé en acier ferritique, par exemple ceux commercialisés sous la marque de type CroFer^{®}, la première pièce de glissement 24a est elle préférentiellement réalisée dans le même matériau.

En outre la seconde pièce de glissement 24b est elle réalisée en zircone yttriée ou en Macor^{®}.

Quoi qu'il en soit, il est fait en sorte que les première et seconde pièces de glissement du joint présentent, respectivement, des coefficients de dilatation thermique proches ou identiques à ceux des de l'interconnecteur 4' et de l'électrolyte 6, afin de mieux accompagner la déformation thermique de ces derniers, comme cela sera détaillé ci-après.

De plus, les deux pièces de glissement 24a, 24b sont réalisées de manière à offrir au joint une rigidité dans la direction de l'axe 8, même à haute température, c'est-à-dire au-delà de 500°C.

De préférence, le rapport entre l'épaisseur de la première pièce de glissement 24a et l'épaisseur de la première portion métallique de contact 16a est compris entre 2 et 5, de même que le rapport entre l'épaisseur de la seconde pièce de glissement 24b et l'épaisseur de la seconde portion métallique de contact 16b est compris entre 2 et 5. Encore plus préférentiellement, l'épaisseur des première et seconde portions métalliques de contact 16a, 16b est la plus mince possible, juste limitée par les possibilités d'usinage. Ici, l'épaisseur des éléments 16a, 16b, 24a, 24b doit être comprise comme leur épaisseur moyenne dans la direction d'empilement, en dehors de leurs zones pourvues des saillies/creux 18a, 18b, 22a, 22b, 26a, 26b.

Le procédé de mise en place du joint 10 entre l'électrolyte 6 et l'interconnecteur 4' est tout d'abord initié par son positionnement à froid entre ces deux éléments, comme cela a été schématisé sur la figure 2. Un faible jeu peut alors exister à ce stade, entre le joint 10 et l'un des éléments 4', 6.

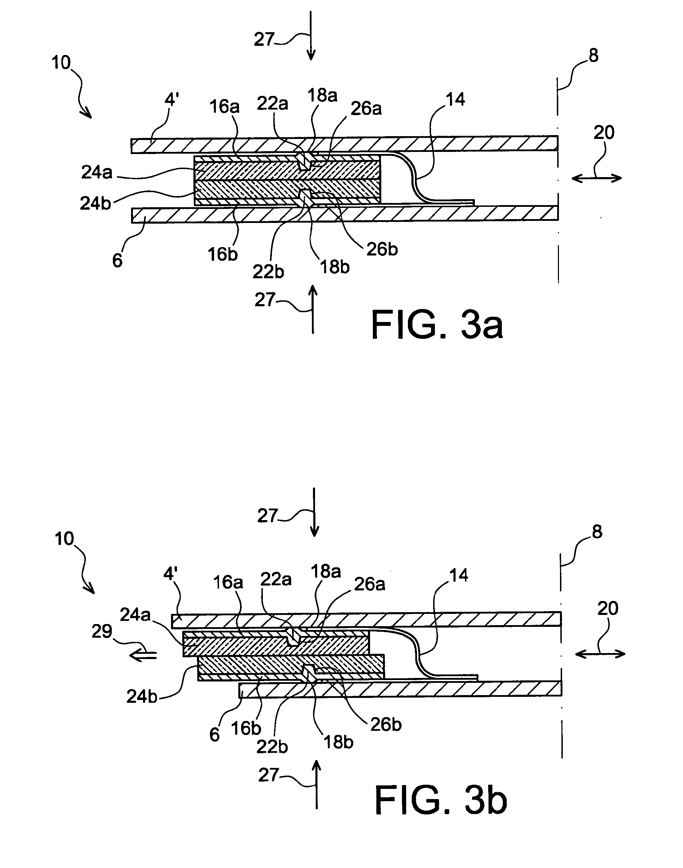

Ensuite, une opération de serrage du joint est réalisée, par exemple à une température proche de 20°C, ou à plus haute température. Durant cette opération, un effort axial est appliqué sur le joint, par exemple par une presse, comme cela a été schématisé par les flèches 27 de la figure 3a.

Durant ce serrage, le joint 10 est plaqué contre les surfaces en regard de l'interconnecteur 4' et de l'électrolyte 6. Cela a pour conséquence un écrasement des organes de contact d'étanchéité 18a, 18b contre leurs éléments 4', 6 associés. Il en résulte un ancrage des portions de contact 16a, 16b respectivement dans l'interconnecteur 4' et l'électrolyte 6. A titre indicatif, l'effort de pression appliqué le long d'une ligne circulaire, au droit du joint, peut être de l'ordre de 3 N/mm.

Ensuite, l'ensemble, toujours soumis à l'effort de pression, est placé dans un four et soumis à une augmentation de la température, de manière à atteindre une température de fonctionnement du système, par exemple de l'ordre de 800°C.

Au cours de cette augmentation de la température, les différents composants de l'ensemble se dilatent thermiquement, en particulier dans la direction radiale, selon des amplitudes définies par leur coefficient de dilatation thermique.

Ainsi, il est connu d'observer une dilatation thermique différentielle des deux éléments 4', 6 dans la direction radiale 20, l'effet de cette dilatation différentielle dans la direction axiale restant négligeable.

Plus précisément, comme cela a été schématisé de façon volontairement exagérée pour des raisons de clarté sur la figure 3b, l'interconnecteur 4' a tendance à plus s'écarter de l'axe 8 que l'électrolyte 6, tel que cela est schématisé par la flèche 29.

Néanmoins, cela n'a pas pour conséquence de rompre les ancrages précités, puisqu'au lieu d'un glissement entre la portion métallique de contact 16a, 16b et son élément associé 4', 6, il se produit un glissement entre les deux pièces de glissement 24a, 24b prévues à cet effet au coeur du joint d'étanchéité, et qui se déforment respectivement selon des amplitudes similaires à leurs éléments associés 4', 6, en raison des coefficients de dilatation thermiques identiques ou similaires.

En d'autres termes, les première et seconde portions de contact 16a, 16b accompagnent respectivement les déformations de l'interconnecteur 4' et de l'électrolyte 6, notamment grâce à la déformation de la structure intérieure flexible 14, sans glisser sur ces éléments 4', 6, c'est-à-dire en conservant l'ancrage conférant l'étanchéité.

Ensuite, le système à cellule électrochimique peut fonctionner, toujours avec le joint 10 maintenu sous pression, comme montré sur la figure 3b.

Enfin, il est noté que le second joint 10 présente une conception similaire à celle du joint qui vient d'être présenté, en étant placée de manière renversée entre l'interconnecteur anodique 2' et l'électrolyte 6.

Bien entendu, diverses modifications peuvent être apportées par l'homme du métier à l'invention qui vient d'être décrite, uniquement à titre d'exemples non limitatifs.

## Revendications

1. Joint d'étanchéité (10) destiné à être interposé entre un premier et un second éléments (4', 6) respectivement réalisés dans des matériaux présentant des coefficients de dilatation thermique différents, ledit joint comprenant :
- une première et une seconde portions métalliques de contact (16a, 16b) espacées l'une de l'autre selon une direction axiale d'empilement (8), lesdites première et seconde portions métalliques étant respectivement destinées à contacter de façon étanche lesdits premier et second éléments ;
- des moyens de liaison étanche (14) entre lesdites première et seconde portions métalliques de contact (16a, 16b), autorisant un déplacement relatif entre celles-ci selon une direction radiale (20) du joint ; et - une première pièce de glissement (24a), ledit joint étant caractérisé en se qu'il comprend une seconde pièce de glissement (24b), et que
- ladite première et ladite seconde pièces de glissement (24a, 24b) sont empilées selon ladite direction axiale d'empilement (8), et respectivement couplées en translation selon ladite direction radiale auxdites première et seconde portions métalliques de contact (16a, 16b) entre lesquelles elles sont interposées, de manière à pouvoir glisser relativement l'une par rapport à l'autre selon ladite direction radiale (20).

2. Joint d'étanchéité selon la revendication 1, **caractérisé en ce que** lesdites première et seconde pièces de glissement (24a, 24b) sont au contact l'une de l'autre.

3. Joint d'étanchéité selon la revendication 1 ou la revendication 2, **caractérisé en ce que** lesdites première et seconde portions métalliques de contact (16a, 16b) présentent chacune au moins un organe de contact d'étanchéité (18a, 18b) en saillie dans la direction axiale d'empilement, vers l'extérieur du joint, ainsi qu'au moins un organe de couplage en translation (22a, 22b) en saillie dans la direction axiale d'empilement, vers l'intérieur du joint, logé dans un orifice complémentaire (26a, 26b) pratiqué dans sa pièce de glissement associée.

4. Joint d'étanchéité selon l'une quelconque des revendications précédentes, **caractérisé en ce que** lesdites première et seconde portions métalliques de contact (16a, 16b) sont réalisées dans un alliage de Fer, de Chrome et d'Aluminium.

5. Joint d'étanchéité selon l'une quelconque des revendications précédentes, **caractérisé en ce que** ladite première pièce de glissement (24a) est réalisée dans un alliage comprenant l'élément Ni dans une proportion d'au moins 72%, Cr dans une proportion de 14 et 17%, et Fe dans une proportion entre 6 et 10%.

6. Joint d'étanchéité selon l'une quelconque des revendications précédentes, **caractérisé en ce que** ladite seconde pièce de glissement (24b) est réalisée en zircone yttriée.

7. Joint d'étanchéité selon l'une quelconque des revendications précédentes, **caractérisé en ce que** lesdits moyens de liaison étanche (14) sont réalisés dans le même matériau que celui desdites première et seconde portions métalliques de contact (16a, 16b).

8. Joint d'étanchéité selon l'une quelconque des revendications précédentes, **caractérisé en ce que** le rapport entre l'épaisseur de la première pièce de glissement (24a) et l'épaisseur de la première portion métallique de contact (16a) est compris entre 2 et 5, et **en ce que** le rapport entre l'épaisseur de la seconde pièce de glissement (24b) et l'épaisseur de la seconde portion métallique de contact (16b) est compris entre 2 et 5.

9. Assemblage comprenant au moins un joint d'étanchéité (10) selon l'une quelconque des revendications précédentes, interposé entre un premier et un second éléments (4', 6) respectivement réalisés dans des matériaux présentant des coefficients de dilatation thermique différents.

10. Assemblage selon la revendication 9, **caractérisé en ce que** lesdites première et seconde pièces de glissement (24a, 24b) du joint présentent, respectivement, des coefficients de dilatation thermique proches ou identiques à ceux desdites premier et second éléments.

11. Assemblage selon la revendication 8 ou la revendication 10, **caractérisé en ce que** les premier et second éléments sont respectivement métallique et en céramique.

12. Système à cellule électrochimique (1) comprenant au moins un joint d'étanchéité (10) selon l'une quelconque des revendications 1 à 8.

13. Système selon la revendication 12, **caractérisé en ce qu'**il comprend au moins une cellule électrochimique (1) pourvue d'une anode (2), d'une cathode (4), ainsi que d'un électrolyte (6) agencé entre l'anode et la cathode, un interconnecteur anodique (2') et un interconnecteur cathodique (4') étant associés à ladite cellule électrochimique (1), reliés respectivement à l'anode et à la cathode, ledit système comprenant également au moins un joint d'étanchéité (10) selon l'une quelconque des revendications 1 à 8, placé entre ledit électrolyte (6) et l'interconnecteur anodique (2'), et/ou entre ledit électrolyte (6) et l'interconnecteur cathodique (4').

14. Système selon la revendication 13, **caractérisé en ce que** pour chaque joint, chacune desdites première et seconde pièces de glissement (24a, 24b) présente un coefficient de dilatation thermique proche ou identique à celui de l'élément, parmi les interconnecteurs anodique et cathodique et l'électrolyte, auquel elle est associée.

15. Système selon l'une quelconque des revendications 12 à 14, **caractérisé en ce que** les interconnecteurs anodique et cathodique sont métalliques et l'électrolyte en céramique.

16. Système selon l'une quelconque des revendications 12 à 15, **caractérisé en ce qu'**il est un électrolyseur haute température, ou une pile à combustible fonctionnant à haute température.

## Patentansprüche

1. Dichtungsring (10), der zwischen einem ersten und einem zweiten Element (4', 6) eingesetzt werden soll, die jeweils aus Materialien hergestellt sind, die unterschiedliche Wärmeausdehnungskoeffizienten aufweisen, wobei die Dichtung Folgendes umfasst:
- einen ersten und einen zweiten metallischen Kontaktteil (16a, 16b), die gemäß einer axialen Stapelrichtung (8) voneinander beabstandet sind, wobei der erste und der zweite metallische Teil jeweils einen dichten Kontakt mit dem ersten und dem zweiten Element herstellen sollen;
- Mittel zur dichten Verbindung (14) zwischen dem ersten und dem zweiten metallischen Kontaktteil (16a, 16b), die eine relative Bewegung zwischen diesen gemäß einer Radialrichtung (20) der Dichtung ermöglichen; und
- ein erstes Gleitteil (24a), wobei die Dichtung **dadurch gekennzeichnet ist, dass** sie ein zweites Gleitteil (24b) umfasst und dass
- das erste und das zweite Gleitteil (24a, 24b) gemäß der axialen Stapelrichtung (8) gestapelt sind und jeweils gemäß der Radialrichtung des ersten und des zweiten metallischen Kontaktteils (16a, 16b), zwischen denen sie eingesetzt sind, übertragungsgekoppelt sind, um relativ zueinander gemäß der Radialrichtung (20) gleiten zu können.

2. Dichtungsring nach Anspruch 1, **dadurch gekennzeichnet, dass** das erste und das zweite Gleitteil (24a, 24b) miteinander in Kontakt stehen.

3. Dichtungsring nach Anspruch 1 oder 2, **dadurch gekennzeichnet, dass** der erste und der zweite metallische Kontaktteil (16a, 16b) jeweils mindestens ein Dichtungskontaktglied (18a, 18b), das in der axialen Stapelrichtung vorspringt, sowie mindestens ein Übertragungskupplungsglied (22a, 22b), das in der axialen Stapelrichtung vorspringt, gegen das Innere der Dichtung aufweisen, das in einer komplementären Öffnung (26a, 26b) untergebracht ist, die in ihrem zugehörigen Gleitteil hergestellt ist.

4. Dichtungsring nach einem der vorhergehenden Ansprüche, **dadurch gekennzeichnet, dass** der erste und der zweite metallische Kontaktteil (16a, 16b) aus einer Eisen-, Chrom- und Aluminiumlegierung hergestellt ist.

5. Dichtungsring nach einem der vorhergehenden Ansprüche, **dadurch gekennzeichnet, dass** das erste Gleitteil (24a) aus einer Legierung hergestellt ist, die das Element Ni in einem Anteil von mindestens 72 %, Cr in einem Anteil zwischen 14 und 17 % und Fe in einem Anteil zwischen 6 und 10 % umfasst.

6. Dichtungsring nach einem der vorhergehenden Ansprüche, **dadurch gekennzeichnet, dass** das zweite Gleitteil (24b) aus Yttrium-stabilisiertem Zirkoniumoxid hergestellt ist.

7. Dichtungsring nach einem der vorhergehenden Ansprüche, **dadurch gekennzeichnet, dass** die Mittel zur dichten Verbindung (14) aus demselben Material wie der erste und der zweite metallische Kontaktteil (16a, 16b) hergestellt sind.

8. Dichtungsring nach einem der vorhergehenden Ansprüche, **dadurch gekennzeichnet, dass** das Verhältnis zwischen der Dicke des ersten Gleitteils (24a) und der Dicke des ersten metallischen Kontaktteils (16a) zwischen 2 und 5 liegt und dass das Verhältnis zwischen der Dicke des zweiten Gleitteils (24b) und der Dicke des zweiten metallischen Kontaktteils (16b) zwischen 2 und 5 liegt.

9. Baugruppe, die mindestens einen Dichtungsring (10) nach einem der vorhergehenden Ansprüche umfasst, der zwischen einem ersten und einem zweiten Element (4', 6) eingesetzt ist, die jeweils aus Materialien hergestellt sind, die unterschiedliche Wärmeausdehnungskoeffizienten aufweisen.

10. Baugruppe nach Anspruch 9, **dadurch gekennzeichnet, dass** das erste und das zweite Gleitteil (24a, 24b) der Dichtung jeweils Wärmeausdehnungskoeffizienten aufweisen, die denen des ersten und des zweiten Elements nahe sind oder mit diesen identisch sind.

11. Baugruppe nach Anspruch 8 oder 10, **dadurch gekennzeichnet, dass** das erste und das zweite Element metallisch bzw. aus Keramik sind.

12. System mit einem Brennstoffelement (1), das mindestens einen Dichtungsring (10) nach einem der Ansprüche 1 bis 8 umfasst.

13. System nach Anspruch 12, **dadurch gekennzeichnet, dass** es mindestens ein Brennstoffelement (1) umfasst, das mit einer Anode (2), einer Kathode (4) sowie einem Elektrolyt (6), der zwischen der Anode und der Kathode angeordnet ist, ausgestattet ist, wobei ein Anoden-Interkonnektor (2') und ein Kathoden-Interkonnektor (4') mit dem Brennstoffelement (1) verbunden sind, die mit der Anode bzw. der Kathode verbunden sind, wobei das System außerdem mindestens einen Dichtungsring (10) nach einem der Ansprüche 1 bis 8 umfasst, der zwischen dem Elektrolyt (6) und dem Anoden-Interkonnektor (2') und/oder zwischen dem Elektrolyt (6) und dem Kathoden-Interkonnektor (4') platziert ist.

14. System nach Anspruch 13, **dadurch gekennzeichnet, dass** für jede Dichtung jeweils das erste und das zweite Gleitteil (24a, 24b) einen Wärmeausdehnungskoeffizienten aufweisen, der nahe dem des Elements aus dem Anoden-Interkonnektor und dem Kathoden-Interkonnektor und dem Elektrolyt, mit dem sie verbunden ist, ist oder mit diesem identisch ist.

15. System nach einem der Ansprüche 12 bis 14, **dadurch gekennzeichnet, dass** der Anoden-Interkonnektor und der Kathoden-Interkonnektor metallisch sind und der Elektrolyt aus Keramik ist.

16. System nach einem der Ansprüche 12 bis 15, **dadurch gekennzeichnet, dass** es eine Hochtemperatur-Elektrolysezelle oder eine Brennstoffzelle, die bei hoher Temperatur arbeitet ist.

## Claims

1. Seal (10) intended to be inserted between a first and a second element (4', 6) respectively made of materials having different coefficients of thermal expansion, said seal comprising:
- a first and a second metallic contact portion (16a, 16b) spaced along an axial stacking direction (8), said first and second metallic portions being respectively intended to contact said first and second elements tightly;
- tight connection means (14) between said first and second metallic contact portions (16a, 16b), allowing a relative movement between same along a radial direction (20) of the seal; and
- a first sliding part (24a), said seal being **characterized in that** it comprises a second sliding part (24b);
- said first and said second sliding part (24a, 24b) along said axial stacking direction (8), and respectively coupled in translation along said radial direction with said first and second metallic contact portions (16a, 16b) between which they are inserted, so as to be able to slide in relation to each other along said radial direction (20).

2. Seal according to claim 1, **characterised in that** said first and second sliding parts (24a, 24b) are in contact with each other.

3. Seal according to claim 1 or claim 2, **characterised in that** said first and second metallic contact portions (16a, 16b) each have at least one tight contact member (18a, 18b) projecting in the axial stacking direction, the seal, and at least one translational coupling member (22a, 22b) projecting in the axial stacking direction, towards the inside of the seal, housed in a complementary orifice (26a, 26b) produced in the associated sliding part thereof.

4. Seal according to any of the above claims, **characterised in that** said first and second metallic contact portions (16a, 16b) are made of an Iron, Chromium and Aluminium alloy.

5. Seal according to any of the above claims, **characterised in that** said first sliding part (24a) is made of an alloy comprising the element Ni in a proportion of at least 72%, Cr in a proportion between 14 and 17%, and Fe in a proportion between 6 and 10%.

6. Seal according to any of the above claims, **characterised in that** said second sliding part (24b) is made of yttria-stabilised zirconia.

7. Seal according to any of the above claims, **characterised in that** said tight connection means (14) are made of the same material as that of said first and second contact portions (16a, 16b).

8. Seal according to any of the above claims, **characterised in that** the ratio between the thickness of the first sliding part (24a) and the thickness of the first metallic contact portion (16a) is between 2 and 5, and **in that** the ratio between the thickness of the second sliding part (24b) and the thickness of the second metallic contact portion (16b) is between 2 and 5.

9. Assembly comprising at least one seal (10) according to any of the above claims, inserted between a first and a second element (4', 6) respectively made of materials having different coefficients of thermal expansion.

10. Assembly according to claim 9, **characterised in that** said first and second sliding parts (24a, 24b) of the seal have, respectively, coefficients of thermal expansion that are similar or identical to those of said first and second elements.

11. Assembly according to claim 8 or claim 10, **characterised in that** the first and second elements are made of metal and ceramics.

12. Electrochemical cell system (1) comprising at least one seal (10) according to any of claims 1 to 8.

13. System according to claim 12, **characterised in that** it comprises at least one electrochemical cell (1) provided with an anode (2), a cathode (4), and an electrolyte (6) arranged between the anode and the cathode, an anodic interconnector (2') and a cathodic interconnector (4') being associated with said electrochemical cell (1), connected to the anode and the cathode, respectively, said system also comprising at least one seal (10) according to any of claims 1 to 8, placed between said electrolyte (6) and the anodic interconnector (2'), and/or between said electrolyte (6) and the cathodic interconnector (4').

14. System according to claim 13, **characterised in that** for each seal, each of said first and second sliding parts (24a, 24b) has a coefficient of thermal expansion that is similar or identical to that of the element, among the anodic and cathodic interconnectors and the electrolyte, with which it is associated.

15. System according to any of claims 12 to 14, **characterised in that** the anodic and cathodic interconnectors are metallic and the electrolyte ceramic.

16. System according to any of claims 12 to 15, **characterised in that** it is a high-temperature electrolyser or a high-temperature fuel cell.
